# EUROPEAN PATENT SPECIFICATION

(11) **EP 2 985 978 B1**
(45) Date of publication and mention of the grant of the patent: **30.01.2019**
(21) Application number: 15178753.8
(22) Date of filing: 29.07.2015
(51) Int. Cl.: H04L 29/08

(54) **WLAN ADAPTER FOR VEHICLE HEAD UNITS**
WLAN-ADAPTER FÜR FAHRZEUGKOPFEINHEITEN
ADAPTATEUR DE RÉSEAU LOCAL SANS FIL POUR UNITÉS DE TÊTE HAUTE DE VEHICULE

(30) Priority: 15.08.2014 US 201414461019
(43) Date of publication of application: 17.02.2016
(73) Proprietor: Harman Becker Automotive Systems GmbH, 76307 Karlsbad (DE)
(72) Inventor: PFAFFINGER, Gerhard, 93053 Regensburg (DE); POWER, Des, 518057 Shenzhen (CN)
(74) Representative: Westphal, Mussgnug & Partner Patentanwälte mbB

(56) References cited:
- US-A1- 2010 067 510
- US-A1- 2012 039 248
- US-A1- 2013 195 088

## Description

### TECHNICAL FIELD

This disclosure relates to providing communications and services to a device e.g., the head unit of a vehicle.

### BACKGROUND

United States Patent Application Publication 2010/0067510A1 discloses an apparatus to provide a multi-media communications access point for vehicles that permits subscribing devices to transmit file data, and telephonic or video data to other remote devices via a wireless communications network. The apparatus includes a wireless access switch, a cellular data transceiver, an optional data network signal booster, two antennas, and an input-output interface panel. As information services increasingly become web-based, continuous or nearly continuous access to the internet for communications and data processing devices becomes more important, as end users must be able to access these services in a timely and useful manner. This is becoming especially prevalent in the automobile industry, as drivers increasingly desire an uninterrupted entertainment experience and need current and relevant information that is readily available everywhere and at all times. Thus, an improved approach that provides connectivity and customized services in connection with automobile devices which may not otherwise have connectivity to a more general server-based network such as the Internet is desirable.

### SUMMARY

The invention concerns an apparatus as in claim 1, a method as in claim 7 and a computer readable storage medium as in claim 15.

Other systems, methods, features and advantages will be, or will become, apparent to one with skill in the art upon examination of the following figures and detailed description. It is intended that all such additional systems, methods, features and advantages be included within this description, be within the scope of the invention, and be protected by the following claims.

### BRIEF DESCRIPTION OF THE DRAWINGS

The system may be better understood with reference to the following description and drawings. The components in the figures are not necessarily to scale, emphasis instead being placed upon illustrating the principles of the invention. Moreover, in the figures, like referenced numerals designate corresponding parts throughout the different views.
FIG. 1 is a schematic diagram of an exemplary digital media playback system 100.
FIG. 2 is a schematic diagram of the system architecture of an exemplary USB-WLAN adapter.
FIG. 3 is a perspective view of the USB-WLAN adapter shown in FIG. 2 implemented in USB stick-type mobile device.
FIG. 4 is a flow chart illustrating a method for synchronizing a head unit with a wireless communications network via the USB-WLAN adapter shown in FIG. 2.
FIG. 5 is a table illustrating different modes of operation of the USB-WLAN adapter shown in FIG. 2.

### DETAILED DESCRIPTION OF THE PREFERRED EMBODIMENTS

In describing embodiments illustrated in the drawings, specific terminology is employed for the sake of clarity. However, the invention is not intended to be limited to the specific terminology so selected, and it is to be understood that each specific element includes all technical equivalents that operate in a similar manner to accomplish a similar purpose. Various terms that are used in this specification are to be given their broadest reasonable interpretation when used to interpret the claims.

Moreover, features and procedures whose implementations are well known to those skilled in the art are omitted for brevity. For example, design, selection, and implementation of basic network elements and electronic circuit elements such as interfaces, signal level shifters, buffers, logic elements, communications links, and the like, lie within the ability of those skilled in the art, and accordingly any detailed discussion thereof may be omitted. Likewise, the steps involved in methods described herein may be readily implemented by those skilled in the art without undue experimentation. For example, database access and modification techniques, including programming in database management query languages, may be only briefly mentioned or illustrated, their details being easily surmised by skilled artisans. Thus, the steps involved in methods described herein may be readily implemented by those skilled in the art without undue experimentation.

Further, various aspects, features and embodiments of the arrangement may be described as a process that can be depicted as a flowchart, a flow diagram, a structure diagram, or a block diagram. Although a flowchart may describe the operations as a sequential process, many of the operations can be performed in parallel, concurrently, or in a different order than that described. Operations not needed or desired for a particular implementation may be omitted. A process or steps thereof may correspond to a method, a function, a procedure, a subroutine, a subprogram, and so forth, or any combination thereof.

A networked media playback device is a hardware device capable of rendering digital media delivered to it via a computer network. Networked digital media playback devices are, for example, wireless speakers, wireless headphones, screens, monitors, smartphones and the like. A networked media playback system is a system that allows one or more networked media playback devices connected via a computer network to render digital media in a synchronous matter. In much of the description herein, a wireless audio system is used as an example of a networked media playback system. The description is provided in terms of wireless audio devices and wireless audio systems in order to keep the description simple and not obscure various significant concepts. Media content (also referred to just as media) is information and signals that allow for audiovisual experiences for an end-user/audience. Such media content may be provided by audio files, video files, text files, audio streams, video streams, electronic messages and the like.

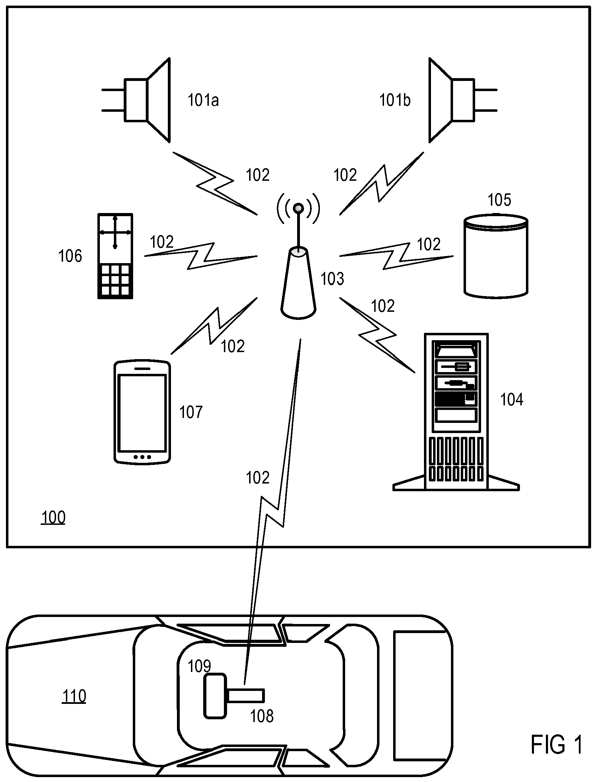

FIG. 1 illustrates an exemplary digital media playback system 100. System 100 includes two wireless speaker devices, in the form of wireless speakers 101a and 101b. Wireless speakers 101a and 101b are controllable individually. Wireless speakers are individually or collectively discoverable and controllable devices that receive digital audio streamed over a network and that provide an analog audio output from the data received. Speakers 101a and 101b connect to a wireless network 102 via an access point 103. For example, the wireless network may be operated in accordance with the IEEE 802.11 standard. For example, data indicative of command signals is received via this network, along with data indicative of digital media for playback. Wireless speakers 101a and 101b may include hardware and software capable of rendering content, processing command signals, and the like, which allow wireless speakers 101a and 101b to reproduce audio signals such as music or speech. Wireless speakers 101a and 101b may include corresponding audio output devices such as one or more transducers, allowing playback of rendered digital media as analogue audio. Wireless speakers 101a and 101b may operate as a stereo pair, i.e. one speaker renders and plays back a left channel signal, the other a right channel signal. Playback instructions may be provided to wireless speakers 101a and 101b so as to affect playback of audio tracks via the speakers. It will be appreciated that system 100 is illustrated for the sake of example only, primarily to illustrate various components relevant to exemplary systems discussed herein. However, it will also be appreciated that the present disclosure is equally applicable to arrangements having a greater or lesser deal of complexity as compared with system 100 and alternatively or additionally to video systems.

Also connected to network 102 is a personal computer (PC) 104. PC 104 may include a memory module for maintaining software instructions referring to a software application for coordinating playback of media via wireless speakers 101a and 101b. In the present example, this software application is a playback control software application and a plurality of media playback content, such as audio (and/or video files) such as MP3, AIFF, AAC and other digital audio files, which may be stored in the memory of PC 104.

In this manner, PC 104 effectively provides the functionality of a media server. In the present example, a distributed media server 105 is also connected to network 102. This media server may be connected to a portable media playback device (e.g., an MP3 player) to allow playback of media items stored on the portable device over the network. Furthermore, a wireless remote control device 106 is connected to the network, this remote control device being configured to control playback of media items via the wireless speakers 101a and 101b. This may include an 802.11 type networked remote control, or other networked device. For example, a control device might take the form of a portable electronic device having an 802.11 type network connection (such as a cellular phone, PDA, portable media player, or the like), or a purpose-built remote having an 802.11 type network connection. In some embodiments, device 106 may interact with PC 104 by way of a thin-client arrangement.

For purposes of this disclosure, a thin client may be considered to be a generally small, simple program or hardware device that has minimal required functionality and data processing abilities, and thus may rely on a server to provide most of the functionality and perform most of the data processing of the entire client-server system. It is possible, though not required, for a thin client to have no disk drive, and provide a user interface and communications facility to the (fat) server. Here it is understood that client devices may have functionality other than a mere web browser and may still fall within the present disclosure's use of term "thin client"; the term "thin client" is intended to mean that the functionality required to perform the data access functions related to this invention is performed by a small, simple program - even if the hardware device may happen to have other programs that are not required for such data access.

The arrangement may be implemented on a computer (server) or a cluster of computers, powered by software that executes the required functionality. The intelligence of the arrangement may be resident in software, and thus any suitable general purpose computers may be employed as hardware platforms. For example, device 106 may have a GUI for software application, although the processing underlying utilization of that GUI substantially resides in PC 104. Each wireless speaker 101a and 101b includes a network interface for connecting to network 102. Alternatively or additionally, a smartphone 107 may be employed for control of the playback from PC 104 or media server 105, or for playback of media content stored in the smartphone 107 or playback from PC 104 or media server 105. The network 102 may further include a USB-WLAN adapter 108, which is connectable to a head unit 109 of a vehicle 110, e.g., an automobile.

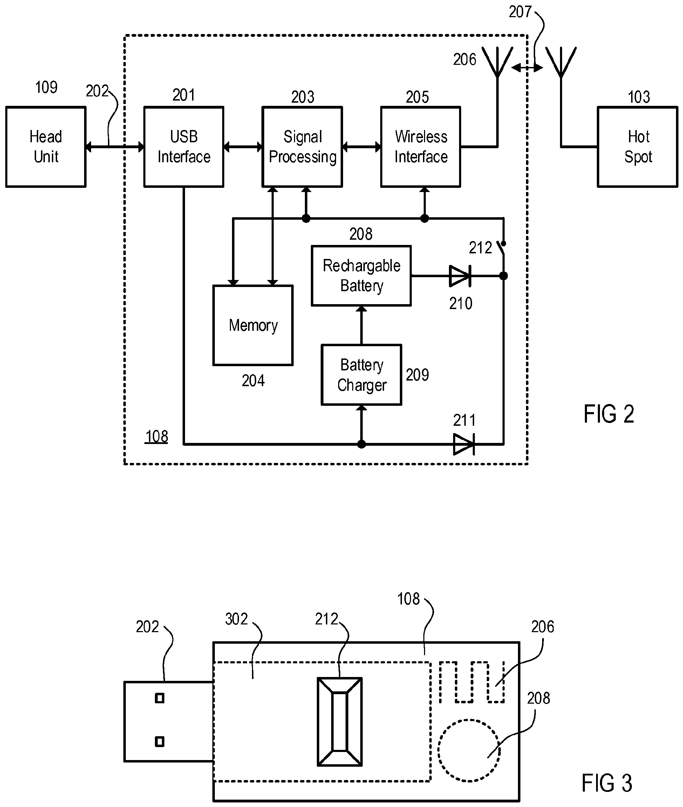

FIG. 2 illustrates the architecture of the (mobile) USB-WLAN adapter 108 shown in FIG. 1 connected to a host computing device such as head unit 109 of vehicle 110, and enabling data communications. A user may insert, connect, or otherwise interface the mobile USB-WLAN adapter 108 with the head unit 109 via, e.g., a USB interface 201 (which may include a USB connector 202 as shown in FIG. 3). The USB-WLAN adapter 108 may further comprise a controller/processor 203 for signal processing and memory unit 204, as well as a radio portion such as a wireless interface 205 for sending/receiving data via an antenna module 206. After the USB-WLAN adapter 108 is interfaced with the head unit 109, the USB-WLAN adapter 108 may then establish a data connection between a base station such as a hotspot device 103, associated with the network 102, and the head unit 109. The USB-WLAN adapter 108 and the hotspot device 103 can communicate via wireless transmitted high-frequency signals 207. In particular, a connection manager operatively running on the head unit 109 (or the USB-WLAN adapter 108) may be launched. The connection manager may display whether a network, e.g., the network 102, is available. If it is, the user can confirm the available network, which in turn causes a Point-to-Point Protocol (PPP) connection to be established between the hotspot device 103 and the head unit 109 via the USB-WLAN adapter 108.

In the USB-WLAN adapter 108, wireless interface 205 may be or include a wireless local area network (WLAN) interface. The WLAN interface may be configured to allow the USB-WLAN adapter 108 to access a WLAN such as network 102 by communicating with hotspot device 103 associated with the WLAN through wireless signals 207 transmitted and received via antenna module 206. Wireless signals 207 are appropriate to the communication protocol(s) associated with the WLAN. That is, the WLAN interface exchanges wireless signals 207 (e.g., TCP/IP over WiFi) with the hotspot device 103via antenna module 206.

The WLAN interface allows the (mobile) USB-WLAN adapter 108 to wirelessly communicate/interact via the hotspot device 103 with other devices in the network such as, e.g., PC 104, media server 105, and smartphone 107. Wireless signals 207 may vary according to the relevant communication protocol(s) utilized by the WLAN and WAN. For example, the WLAN may include, e.g., a WiFi network, wireless USB network, ultrawideband network, or a Zigbee network.

The controller/processor 203 may further serve as a processing backend for the WLAN interface. Alternatively, separate processing circuitry (not shown) may be included for the WLAN function. Instructions stored in the memory unit 204 may be used by the controller/processor 203 to control the operation of the USB-WLAN adapter 108, which includes operation of the WAN interface and/or the LAN interface, as well as to bridge communications between the hotspot device 103 and the head unit 109 and configuring the USB-WLAN adapter 108.

The USB-WLAN adapter 108 may further comprise a power button (power button 301 shown in FIG. 3), that when actuated powers on or off the USB-WLAN adapter 108, depending on its state when the power button is actuated. For example, a re-chargeable Li-Ion (cylindrical) battery cell may be used as battery 208 which can be configured to be recharged via USB interface 201 and a battery charger 209.

Upon powering up the USB-WLAN adapter 108, a connection with the hot spot device 103 is established and the network connection is activated when the vehicle with USB-WLAN adapter 108 is close enough to the hotspot device 103, e.g., when the vehicle 110 is parked in front of the house 100 or in a garage (not shown) close to the house 100. The USB-WLAN adapter 108 is then able to route data from and to the head unit 109 to or from the hot spot device 103. In particular, the USB-WLAN adapter 108 is capable of automatically establishing a data connection, e.g., a PPP connection, as previously described, with the hot spot device 103.

The head unit 109 may then access provided services, such as, e.g., the provision of media content stored in PC104 and/or media server 105. It should be noted that certain authentication or authorization procedures may be executed before allowing such access. A user may complete such authentication/authorization procedures via, e.g., a touchscreen display or keyboard (in connection with a display or screen) of the head unit 109.

Various embodiments of the present invention may be implemented in a system having multiple communication devices that can communicate through one or more networks. The system may comprise any combination of wired or wireless networks such as a mobile telephone network, a wireless Local Area Network (LAN), a Bluetooth personal area network, an Ethernet LAN, a wide area network (WAN), etc. The communication devices may communicate using various transmission technologies such as Code Division Multiple Access (CDMA), Time Division Multiple Access (TDMA), Frequency Division Multiple Access (FDMA), Transmission Control Protocol/Internet Protocol (TCP/IP), Multimedia Messaging Service (MMS), Bluetooth, IEEE 802.11, etc.

However, when the vehicle 110 is parked in front of the house 100 or in a garage (not shown) nearby, i.e., when it is within the reach of the network 102, often the head unit 109 is deactivated so that it may not be capable of providing power to the USB connection or of exchanging data with other devices. In this case, the built-in battery 208 may provide sufficient power for the USB-WLAN adapter 108 to communicate with the network 102. When the head unit 109 is active, it may supply power to the USB-WLAN adapter 108 and may communicate with the USB-WLAN adapter 108 or with other devices in the network 102 via the USB-WLAN adapter 108. Furthermore, memory 204 may be configured to not only store instructions for controller/processor 203 but also to store media content and other data and information received from the head unit and any device within network 102.

FIG. 3 illustrates a USB-WLAN adapter 108 through which a data connection can be established over a WLAN. USB-WLAN adapter 108 may be a USB stick-type USB-WLAN adapter having the USB connector 202 through which the USB-WLAN adapter 108 can interface with the head unit 109. The USB stick-type USB-WLAN adapter 108 may further include a circuit board 302 which carries all circuitry, including parts of the USB interface 201, the controller/processor 203, memory 204, wireless interface 205 and battery charging circuit 209. Antenna module 206 may be arranged on the circuit board 302 or separately in the USB stick as shown in FIG. 3.

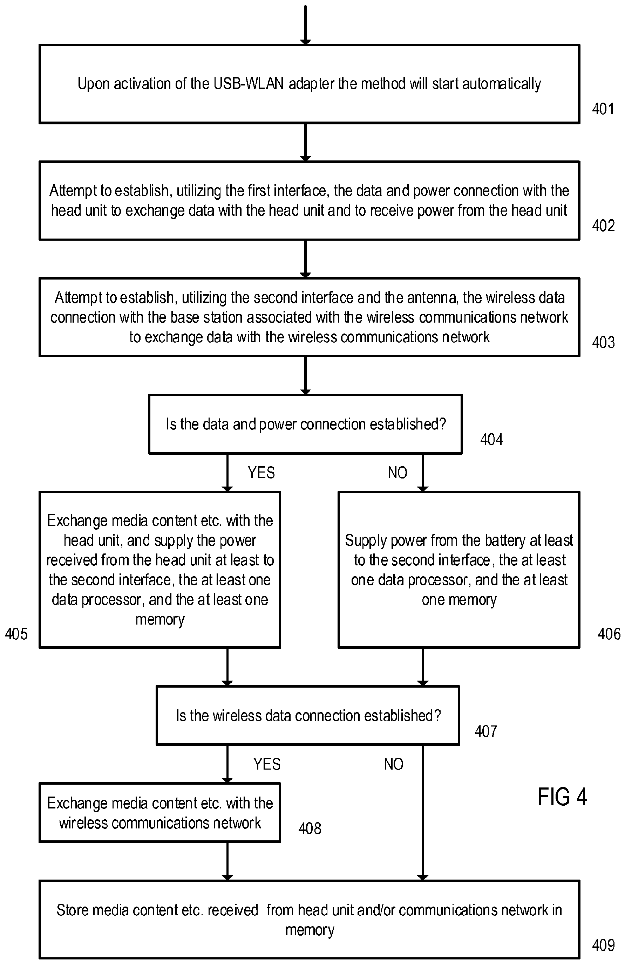

Referring to FIG. 4, a method, which may be implemented by adequate software in the USB-WLAN adapter 108 shown in FIGS. 2 and 3, may provide a data and power connection to the head unit 109 of vehicle 110 and a wireless data connection to the base station (hotspot 103) of wireless communications network 102, and to store to and read from the memory 204 media content. The method may be configured to perform at least the following:

Upon activation of the USB-WLAN adapter the method will start automatically (401).

Then attempt to establish, utilizing a first interface such as USB interface 201, the data and power connection with the head unit 109 to exchange data with the head unit 109 and to receive power from the head unit 109 (402).

Attempt to establish, utilizing the second interface such as wireless interface 205 and the antenna 206, the wireless data connection with the base station, such as hotspot 103 associated with the wireless communications network 102, to exchange data with the wireless communications network 102 (403).

Check whether the data and power connection is established (404).

In case the data and power connection is established, exchange media content with the head unit, and supply the power received from the head unit at least to the second interface, the at least one data processor, and the at least one memory (405).

Otherwise supply power from the battery at least to the second interface, the at least one data processor, and the at least one memory (406).

Check whether the data and power connection is established (407).

In case the wireless data connection is established, exchange media content with the wireless communications network (Procedure 408).

Finally, at least one of media content, control instructions, media content play lists, media content information and audio settings may be stored in the memory of the apparatus and exchanged with the head unit or the wireless communications network or both head unit and the wireless communications network (409).

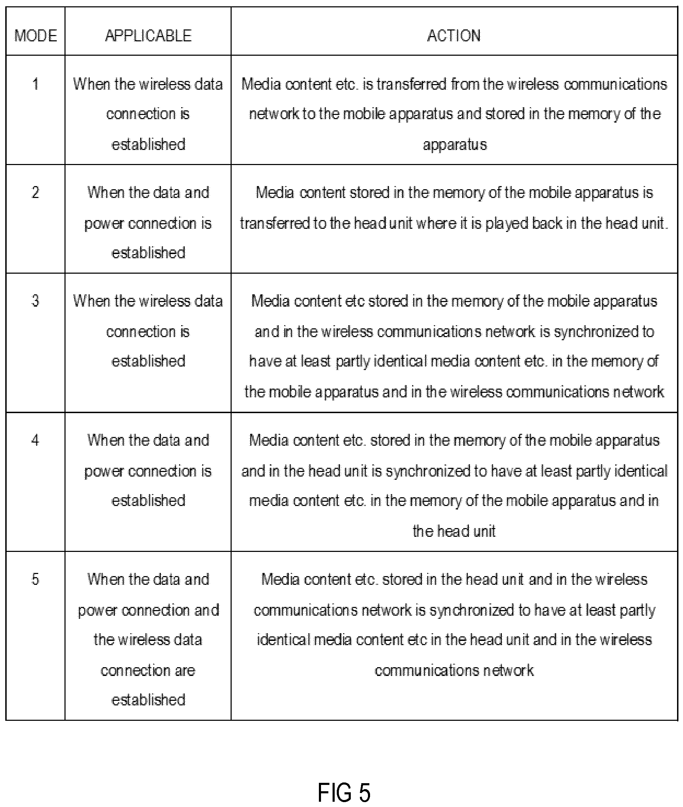

Dependent on the playback and control functions implemented in the head unit and the actual status (active/inactive) of the data and power connection and the wireless data connection, the following modes of operation may apply as shown in FIG. 5:

In a first mode of operation, applicable when the wireless data connection is established, at least one of media content, control instructions, media content play lists, media content information and audio settings is transferred from the wireless communications network to the mobile apparatus and stored in the memory of the apparatus.

In a second mode of operation, applicable when the data and power connection is established, media content stored in the memory of the mobile apparatus is transferred to the head unit where it is played back in the head unit. The data and power connection may not be established when at least one of media content, control instructions, media content play lists, media content information and audio settings received from the wireless communications network is stored in the memory of the apparatus.

In a third mode of operation, when the wireless data connection is established, at least one of media content, control instructions, media content play lists, media content information and audio settings stored in the memory of the mobile apparatus and in the wireless communications network is synchronized to have at least one of identical media content, control instructions, media content play lists, media content information and audio settings in the memory of the mobile apparatus and in the wireless communications network.

In a fourth mode of operation, applicable when the data and power connection is established, at least one of media content, control instructions, media content play lists, media content information and audio settings stored in the memory of the mobile apparatus and in the head unit is synchronized to have at least one of identical media content, control instructions, media content play lists, media content information and audio settings in the memory of the mobile apparatus and in the head unit.

In a fifth mode of operation, applicable when the data and power connection and the wireless data connection are established, at least one of media content, control instructions, media content play lists, media content information and audio settings stored in the head unit and in the wireless communications network is synchronized to have at least one of identical media content, control instructions, media content play lists, media content information and audio settings in the head unit and in the wireless communications network.

For example, for legacy devices the USB stick-type USB-WLAN adapter can be plugged into any audio device which can play audio/video from a USB stick memory. For other devices the USB stick can be part of a wireless local area network to stream directly from any device in the network. The stick can be plugged into the head units of vehicles since head units often have a USB port into which the USB stick-type USB-WLAN adapter cab be plugged to play audio/video from it in periods when no WLAN/WiFi connection is available. When the car is in the garage at home, the USB stick-type USB-WLAN adapter will be detected and will be synchronized with the home network play lists and media content. Due to its battery it works with switched off head unit, thus extending the sync time. If the head unit is later on while driving the battery of the USB stick-type USB-WLAN adapter will be charged.

While various embodiments of the invention have been described, it will be apparent to those of ordinary skill in the art that many more embodiments and implementations are possible within the scope of the invention. Accordingly, the invention is not to be restricted except in light of the attached claims.

## Claims

1. An apparatus comprising:
a first interface (201) configured to provide a data connection to a head unit (109) of a vehicle (110);
an antenna (206) configured to receive and transmit high-frequency signals;
a second interface (205) connected to the antenna and configured to provide a wireless data connection to a base station of a wireless communications network (102);
at least one data processor (203);
at least one memory (204) configured to store a computer program code and media content;
a battery (208) configured to supply power at least to the second interface (205), the at least one data processor (203), and the at least one memory (208); wherein
the first interface (201) is further configured to provide a power connection to the head unit (109) of the vehicle (110); and
the at least one memory (208) and the computer program code are configured to, with the at least one processor (203), cause the apparatus to perform at least the following:
attempt to establish, utilizing the first interface (201), the data and power connection with the head unit (109) to exchange data with the head unit (109) and to receive power from the head unit (109);
attempt to establish, utilizing the second interface (205) and the antenna (206), the wireless data connection with the base station (103) associated with the wireless communications network (102) to exchange data with the wireless communications network (102);
if the data and power connection is established, exchange media content with the head unit (109), and supply the power received from the head unit (109) at least to the second interface (205), the at least one data processor (203), and the at least one memory (204); otherwise supply power from the battery (208) at least to the second interface (205), the at least one data processor (203), and the at least one memory (204);
if the wireless data connection is established, exchange media content with the wireless communications network (102); and
if the data and power connection to the head unit is not established and power is supplied from the battery (208), to store in the memory (204) media content received from the wireless communication network (102).

2. The apparatus of claim 1, further comprising a battery charging circuit (209), wherein the battery (208) is rechargeable and charged with power from the head unit (109) when the data and power connection is established.

3. The apparatus of claim 1 or 2, wherein the first interface (201) is configured to operate according to a universal serial bus (USB) standard.

4. The apparatus of claim 3, wherein the apparatus is an USB stick-type mobile apparatus.

5. The apparatus of any of the preceding claims, wherein the memory (204) is further configured to additionally store at least one of control instructions, media content play lists, media content information and audio settings to be exchanged with the head unit (109) or the wireless communications network (102) or both head unit (109) and the wireless communications network (102).

6. The apparatus of any of the preceding claims, wherein the second interface (205) is configured to operate according to wireless local area network (WLAN) standard.

7. A method configured to provide a data and power connection to a head unit (109) of a vehicle (110) and a wireless data connection to a base station (103) of a wireless communications network (102), as well as to store media content to a memory (204) and read the media content from the memory (204); whereby:
the memory is arranged in a mobile apparatus (108) with a battery which is configured to supply power for the mobile apparatus; and
the method being further configured to perform at least the following:
attempting to establish, utilizing a first interface (201), the data and power connection with the head unit (109) to exchange data with the head unit (109) and to receive power from the head unit (109);
attempting to establish, utilizing a second interface (205) and an antenna (206), the wireless data connection (207) with the base station (103) associated with the wireless communications network (102) to exchange data with the wireless communications network (102);
if the data and power connection is established, exchanging media content with the head unit (109), and supply the power received from the head unit (109) to the mobile apparatus (108); otherwise supply power from the battery (208) to the mobile apparatus (108); and
if the wireless data connection is established, exchanging media content with the wireless communications network (102), and
if the data and power connection to the head unit is not established and power is supplied from the battery (208), storing in the memory (204) media content received from the wireless communication network (102).

8. The method of claim 7, wherein at least one of control instructions, media content play lists, media content information and audio settings are stored in the memory (204) of the apparatus and exchanged with the head unit (109) or the wireless communications network (102) or both head unit (109) and the wireless communications network (102).

9. The method of claim 7 or 8, further comprising a first mode of operation, applicable when the wireless data connection is established, in which at least one of media content, control instructions, media content play lists, media content information and audio settings is transferred from the wireless communications network to the mobile apparatus (108) and stored in the memory (204) of the apparatus.

10. The method of any of claims 7-9, further comprising a second mode of operation, applicable when the data and power connection is established, in which media content stored in the memory (204) of the mobile apparatus (108) is transferred to the head unit (109) where it is played back in the head unit (109).

11. The method of claim 10, wherein the data and power connection is not established when at least one of media content, control instructions, media content play lists, media content information and audio settings received from the wireless communications network (102) is stored in the memory (204) of the apparatus.

12. The method of any of claims 7-11, further comprising a third mode of operation, when the wireless data connection (207) is established, in which at least one of media content, control instructions, media content play lists, media content information and audio settings stored in the memory (204) of the mobile apparatus (108) and in the wireless communications network (102) is synchronized to have at least one of identical media content, control instructions, media content play lists, media content information and audio settings in the memory of the mobile apparatus and in the wireless communications network (102).

13. The method of any of claim 7-12, further comprising a fourth mode of operation, applicable when the data and power connection is established, in which at least one of media content, control instructions, media content play lists, media content information and audio settings stored in the memory of the mobile apparatus (108) and in the head unit (109) is synchronized to have at least one of identical media content, control instructions, media content play lists, media content information and audio settings in the memory of the mobile apparatus and in the head unit.

14. The method of any of claim 7-13, further comprising a fifth mode of operation, applicable when the data and power connection and the wireless data connection (207) are established, in which at least one of media content, control instructions, media content play lists, media content information and audio settings stored in the head unit (109) and in the wireless communications network (102) is synchronized to have at least one of identical media content, control instructions, media content play lists, media content information and audio settings in the head unit (109) and in the wireless communications network (102).

15. A computer readable storage medium with stored software code that the processor (203) can execute to perform the method of claims 7-14.

## Patentansprüche

1. Vorrichtung, die Folgendes umfasst:
eine erste Schnittstelle (201), die dazu konfiguriert ist, eine Datenverbindung zu einer Kopfeinheit (109) eines Fahrzeugs (110) bereitzustellen;
eine Antenne (206), die dazu konfiguriert ist, Hochfrequenzsignale zu empfangen und zu übermitteln;
eine zweite Schnittstelle (205), die mit der Antenne verbunden und dazu konfiguriert ist, eine drahtlose Datenverbindung zu einer Basisstation eines drahtlosen Kommunikationsnetzwerkes (102) bereitzustellen;
mindestens einen Datenprozessor (203);
mindestens einen Speicher (204), der dazu konfiguriert ist, einen Computerprogrammcode und Medieninhalt zu speichern;
eine Batterie (208), die dazu konfiguriert ist, mindestens die zweite Schnittstelle (205), den mindestens einen Datenprozessor (203) und den mindestens einen Speicher (208) mit Energie zu versorgen; wobei
die erste Schnittstelle (201) ferner dazu konfiguriert ist, eine Energieverbindung zu der Kopfeinheit (109) des Fahrzeugs (110) bereitzustellen; und
der mindestens eine Speicher (208) und der Computerprogrammcode dazu konfiguriert sind, mit dem mindestens einen Prozessor (203) die Vorrichtung zu veranlassen, mindestens das Folgende durchzuführen:
Versuchen, durch Verwenden der ersten Schnittstelle (201), die Daten- und Energieverbindung mit der Kopfeinheit (109) herzustellen, um Daten mit der Kopfeinheit (109) auszutauschen und Energie von der Kopfeinheit (109) zu empfangen;
Versuchen, durch Verwenden der zweiten Schnittstelle (205) und der Antenne (206), die drahtlose Datenverbindung mit der Basisstation (103), die mit dem drahtlosen Kommunikationsnetzwerk (102) assoziiert ist, herzustellen, um Daten mit dem drahtlosen Kommunikationsnetzwerk (102) auszutauschen;
falls die Daten- und Energieverbindung hergestellt wird, Austauschen von Medieninhalt mit der Kopfeinheit (109) und Versorgen mindestens der zweiten Schnittstelle (205), des mindestens einen Datenprozessors (203) und des mindestens einen Speichers (204) mit der von der Kopfeinheit (109) empfangenen Energie; andernfalls Versorgen mindestens der zweiten Schnittstelle (205), des mindestens einen Datenprozessors (203) und des mindestens einen Speichers (204) mit Energie von der Batterie (208);
falls die drahtlose Datenverbindung hergestellt wird, Austauschen von Medieninhalt mit dem drahtlosen Kommunikationsnetzwerk (102); und
falls die Daten- und Energieverbindung zu der Kopfeinheit nicht hergestellt wird und die Energie von der Batterie (208) versorgt wird, Speichern von Medieninhalt, der von dem drahtlosen Kommunikationsnetzwerk (102) empfangen wird, in dem Speicher (204) .

2. Vorrichtung nach Anspruch 1, ferner eine Batterieladeschaltung (209) umfassend, wobei die Batterie (208) wiederaufladbar ist und mit Energie von der Kopfeinheit (109) versorgt wird, wenn die Daten- und Energieverbindung hergestellt wird.

3. Vorrichtung nach Anspruch 1 oder 2, wobei die erste Schnittstelle (201) dazu konfiguriert ist, gemäß einem Universal-Serial-Bus(USB)-Standard betrieben zu werden.

4. Vorrichtung nach Anspruch 3, wobei die Vorrichtung eine USBstickartige mobile Vorrichtung ist.

5. Vorrichtung nach einem der vorstehenden Ansprüche, wobei der Speicher (204) ferner dazu konfiguriert ist, zusätzlich mindestens eines von Steuerbefehlen, Wiedergabelisten für Medieninhalt, Informationen von Medieninhalt und Audioeinstellungen, die mit der Kopfeinheit (109) oder dem drahtlosen Kommunikationsnetzwerk (102) oder sowohl mit der Kopfeinheit (109) als auch dem drahtlosen Kommunikationsnetzwerk (102) auszutauschen sind, zu speichern.

6. Vorrichtung nach einem der vorstehenden Ansprüche, wobei die zweite Schnittstelle (205) dazu konfiguriert ist, gemäß dem Wireless-Local-Area-Network(WLAN)-Standard betrieben zu werden.

7. Verfahren, das dazu konfiguriert ist, eine Daten- und Energieverbindung zu einer Kopfeinheit (109) eines Fahrzeugs (110) und eine drahtlose Datenverbindung zu einer Basisstation (103) eines drahtlosen Kommunikationsnetzwerkes (102) bereitzustellen sowie Medieninhalt in einem Speicher (204) zu speichern und den Medieninhalt aus dem Speicher (204) zu lesen; wobei:
der Speicher in einer mobilen Vorrichtung (108) mit einer Batterie angeordnet ist, die dazu konfiguriert ist, die mobile Vorrichtung mit Energie zu versorgen; und
das Verfahren ferner dazu konfiguriert ist, mindestens das Folgende durchzuführen:
Versuchen, durch Verwenden einer ersten Schnittstelle (201), die Daten- und Energieverbindung mit der Kopfeinheit (109) herzustellen, um Daten mit der Kopfeinheit (109) auszutauschen und Energie von der Kopfeinheit (109) zu empfangen;
Versuchen, durch Verwenden einer zweiten Schnittstelle (205) und einer Antenne (206), die drahtlose Datenverbindung (207) mit der Basisstation (103), die mit dem drahtlosen Kommunikationsnetzwerk (102) assoziiert ist, herzustellen, um Daten mit dem drahtlosen Kommunikationsnetzwerk (102) auszutauschen;
falls die Daten- und Energieverbindung hergestellt wird, Austauschen von Medieninhalt mit der Kopfeinheit (109) und Versorgen der mobilen Vorrichtung (108) mit der von der Kopfeinheit (109) empfangenen Energie; andernfalls Versorgen der mobilen Vorrichtung (108) mit Energie von der Batterie (208); und
falls die drahtlose Datenverbindung hergestellt wird, Austauschen von Medieninhalt mit dem drahtlosen Kommunikationsnetzwerk (102), und
falls die Daten- und Energieverbindung zu der Kopfeinheit nicht hergestellt und die Energie von der Batterie (208) versorgt wird, Speichern von Medieninhalt, der von dem drahtlosen Kommunikationsnetzwerk (102) empfangen wird, in dem Speicher (204) .

8. Verfahren nach Anspruch 7, wobei mindestens eines von Steuerbefehlen, Wiedergabelisten für Medieninhalt, Informationen von Medieninhalt und Audioeinstellungen in dem Speicher (204) der Vorrichtung gespeichert sind und mit der Kopfeinheit (109) oder dem drahtlosen Kommunikationsnetzwerk (102) oder sowohl mit der Kopfeinheit (109) als auch dem drahtlosen Kommunikationsnetzwerk (102) ausgetauscht werden.

9. Verfahren nach Anspruch 7 oder 8, ferner einen ersten Betriebsmodus umfassend, der anwendbar ist, wenn die drahtlose Datenverbindung hergestellt wird, in welchem mindestens eines von Medieninhalt, Steuerbefehlen, Wiedergabelisten für Medieninhalt, Informationen von Medieninhalt und Audioeinstellungen von dem drahtlosen Kommunikationsnetzwerk an die mobile Vorrichtung (108) übermittelt und in dem Speicher (204) der Vorrichtung gespeichert wird.

10. Verfahren nach einem der Ansprüche 7-9, ferner einen zweiten Betriebsmodus umfassend, der anwendbar ist, wenn die Daten- und Energieverbindung hergestellt wird, in welchem Medieninhalt, der in dem Speicher (204) der mobilen Vorrichtung (108) gespeichert ist, an die Kopfeinheit (109) übermittelt wird, wobei er in der Kopfeinheit (109) wiedergegeben wird.

11. Verfahren nach Anspruch 10, wobei die Daten- und Energieverbindung nicht hergestellt wird, wenn mindestens eines von Medieninhalt, Steuerbefehlen, Wiedergabelisten für Medieninhalt, Information von Medieninhalt und Audioeinstellungen, die von dem drahtlosen Kommunikationsnetzwerk (102) empfangen werden, in dem Speicher (204) der Vorrichtung gespeichert ist.

12. Verfahren nach einem der Ansprüche 7-11, ferner einen dritten Betriebsmodus umfassend, wenn die drahtlose Datenverbindung (207) hergestellt wird, in welchem mindestens eines von Medieninhalt, Steuerbefehlen, Wiedergabelisten für Medieninhalt, Informationen von Medieninhalt und Audioeinstellungen, das in dem Speicher (204) der mobilen Vorrichtung (108) und in dem drahtlosen Kommunikationsnetzwerk (102) gespeichert ist, synchronisiert wird, um mindestens eines von identischem Medieninhalt, identischen Steuerbefehlen, identischen Wiedergabelisten für Medieninhalt, identischen Informationen von Medieninhalt und identischen Audioeinstellungen in dem Speicher der mobilen Vorrichtung und in dem drahtlosen Kommunikationsnetzwerk (102) aufzuweisen.

13. Verfahren nach einem der Ansprüche 7-12, ferner einen vierten Betriebsmodus umfassend, der anwendbar ist, wenn die Daten- und Energieverbindung hergestellt wird, in welchem mindestens eines von Medieninhalt, Steuerbefehlen, Wiedergabelisten für Medieninhalt, Information von Medieninhalt und Audioeinstellungen, das in dem Speicher der mobilen Vorrichtung (108) und in der Kopfeinheit (109) gespeichert ist, synchronisiert wird, um mindestens eines von identischem Medieninhalt, identischen Steuerbefehlen, identischen Wiedergabelisten für Medieninhalt, identischen Informationen von Medieninhalt und identischen Audioeinstellungen in dem Speicher der mobilen Vorrichtung und in der Kopfeinheit aufzuweisen.

14. Verfahren nach einem der Ansprüche 7-13, ferner einen fünften Betriebsmodus umfassend, der anwendbar ist, wenn die Daten- und Energieverbindung und die drahtlose Datenverbindung (207) hergestellt werden, in welchem mindestens eines von Medieninhalt, Steuerbefehlen, Wiedergabelisten für Medieninhalt, Information von Medieninhalt und Audioeinstellungen, das in der Kopfeinheit (109) und in dem drahtlosen Kommunikationsnetzwerk (102) gespeichert ist, synchronisiert wird, um mindestens eines von identischem Medieninhalt, identischen Steuerbefehlen, identischen Wiedergabelisten für Medieninhalt, identischen Informationen von Medieninhalt und identischen Audioeinstellungen in der Kopfeinheit (109) und in dem drahtlosen Kommunikationsnetzwerk (102) aufzuweisen.

15. Computerlesbares Speichermedium mit gespeichertem Softwarecode, den der Prozessor (203) ausführen kann, um das Verfahren nach den Ansprüchen 7-14 durchzuführen.

## Revendications

1. Appareil comprenant :
une première interface (201) configurée pour fournir une connexion de données à une unité de tête (109) d'un véhicule (110) ;
une antenne (206) configurée pour recevoir et transmettre des signaux de haute fréquence ;
une deuxième interface (205) connectée à l'antenne et configurée pour fournir une connexion de données sans fil à une station de base d'un réseau de communication sans fil (102) ;
au moins un processeur de données (203) ;
au moins une mémoire (204) configurée pour stocker un code de programme informatique et un contenu multimédia ;
une batterie (208) configurée pour alimenter en énergie au moins la deuxième interface (205), l'au moins un processeur de données (203) et l'au moins une mémoire (208) ; dans lequel la première interface (201) est configurée en outre pour fournir une connexion d'alimentation à l'unité de tête (109) du véhicule (110) ; et
l'au moins une mémoire (208) et le code de programme informatique sont configurés pour, avec l'au moins un processeur (203), amener l'appareil à effectuer au moins ce qui suit :
tenter d'établir, en utilisant la première interface (201), la connexion de données et d'alimentation avec l'unité de tête (109) pour échanger des données avec l'unité de tête (109) et pour recevoir de l'énergie à partir de l'unité de tête (109) ;
tenter d'établir, en utilisant la deuxième interface (205) et l'antenne (206), la connexion de données sans fil avec la station de base (103) associée au réseau de communication sans fil (102) pour échanger des données avec le réseau de communication sans fil (102) ;
si la connexion de données et d'alimentation est établie, échanger un contenu multimédia avec l'unité de tête (109) et fournir l'énergie reçue à partir de l'unité de tête (109) au moins à la deuxième interface (205), à l'au moins un processeur de données (203) et à l'au moins une mémoire (204) ; sinon, fournir de l'énergie à partir de la batterie (208) au moins à la deuxième interface (205), à l'au moins un processeur de données (203) et à l'au moins une mémoire (204) ;
si la connexion de données sans fil est établie, échanger un contenu multimédia avec le réseau de communication sans fil (102) ; et
si la connexion de données et d'alimentation avec l'unité de tête n'est pas établie et l'énergie est délivrée à partir de la batterie (208), stocker dans la mémoire (204) un contenu multimédia reçu à partir du réseau de communication sans fil (102) .

2. Appareil selon la revendication 1, comprenant en outre un circuit de charge de batterie (209), dans lequel la batterie (208) est rechargeable et chargée avec l'énergie provenant de l'unité de tête (109) quand la connexion de données et d'alimentation est établie.

3. Appareil selon la revendication 1 ou 2, dans lequel la première interface (201) est configurée pour fonctionner selon une norme de bus série universel (USB).

4. Appareil selon la revendication 3, dans lequel l'appareil est un appareil mobile de type clé USB.

5. Appareil selon l'une quelconque des revendications précédentes, dans lequel la mémoire (204) est configurée en outre pour stocker en plus au moins un parmi des instructions de commande, des listes de lecture de contenus multimédias, des informations de contenu multimédia et des réglages audio à échanger avec l'unité de tête (109) ou le réseau de communication sans fil (102) ou à la fois l'unité de tête (109) et le réseau de communication sans fil (102).

6. Appareil selon l'une quelconque des revendications précédentes, dans lequel la deuxième interface (205) est configurée pour fonctionner selon une norme de réseau local sans fil (WLAN).

7. Procédé configuré pour fournir une connexion de données et d'alimentation à une unité de tête (109) d'un véhicule (110) et une connexion de données sans fil à une station de base (103) d'un réseau de communication sans fil (102), ainsi que pour stocker des contenus multimédias dans une mémoire (204) et lire les contenus multimédias à partir de la mémoire (204) ; moyennant quoi :
la mémoire est agencée pour dans un appareil mobile (108) avec une batterie qui est configurée pour alimenter en énergie l'appareil mobile ; et
le procédé étant configuré en outre pour effectuer au moins ce qui suit :
la tentative d'établir, en utilisant une première interface (201), la connexion de données et d'alimentation avec l'unité de tête (109) pour échanger des données avec l'unité de tête (109) et pour recevoir de l'énergie à partir de l'unité de tête (109) ;
la tentative d'établir, en utilisant une deuxième interface (205) et une antenne (206), la connexion de données sans fil (207) avec la station de base (103) associée au réseau de communication sans fil (102) pour échanger des données avec le réseau de communication sans fil (102) ;
si la connexion de données et d'alimentation est établie, échanger un contenu multimédia avec l'unité de tête (109) et fournir l'énergie reçue à partir de l'unité de tête (109) à l'appareil mobile (108) ; sinon, fournir de l'énergie à partir de la batterie (208) à l'appareil mobile (108) ; et
si la connexion de données sans fil est établie, échanger un contenu multimédia avec le réseau de communication sans fil (102), et
si la connexion de données et d'alimentation avec l'unité de tête n'est pas établie et l'énergie est délivrée à partir de la batterie (208), stocker dans la mémoire (204) un contenu multimédia reçu à partir du réseau de communication sans fil (102) .

8. Procédé selon la revendication 7, dans lequel au moins une parmi des instructions de commande, des listes de lecture de contenus multimédias, des informations de contenu multimédia et des réglages audio sont stockés dans la mémoire (204) de l'appareil et échangées avec l'unité de tête (109) ou le réseau de communication sans fil (102) ou à la fois l'unité de tête (109) et le réseau de communication sans fil (102).

9. Procédé selon la revendication 7 ou 8, comprenant en outre un premier mode de fonctionnement, applicable quand la connexion de données sans fil est établie, dans lequel au moins un parmi un contenu multimédia, des instructions de commande, des listes de lecture de contenus multimédias, des informations de contenu multimédia et des réglages audio est transféré du réseau de communication sans fil à l'appareil mobile (108) et stocké dans la mémoire (204) de l'appareil.

10. Procédé selon l'une quelconque des revendications 7 à 9, comprenant en outre un deuxième mode de fonctionnement, applicable quand la connexion de données et d'alimentation est établie, dans lequel un contenu multimédia stocké dans la mémoire (204) de l'appareil mobile (108) est transféré à l'unité de tête (109) où il est reproduit dans l'unité de tête (109) .

11. Procédé selon la revendication 10, dans lequel la connexion de données et d'alimentation n'est pas établie quand au moins un parmi un contenu multimédia, des instructions de commande, des listes de lecture de contenus multimédias, des informations de contenu multimédia et des réglages audio reçus à partir du réseau de communication sans fil (102) est stocké dans la mémoire (204) de l'appareil.

12. Procédé selon l'une quelconque des revendications 7 à 11, comprenant en outre un troisième mode de fonctionnement, quand la connexion de données sans fil (207) est établie, dans lequel au moins un parmi un contenu multimédia, des instructions de commande, des listes de lecture de contenus multimédias, des informations de contenu multimédia et des réglages audio stockés dans la mémoire (204) de l'appareil mobile (108) et dans le réseau de communication sans fil (102) est synchronisé pour avoir au moins un parmi un contenu multimédia, des instructions de commande, des listes de lecture de contenus multimédias, des informations de contenu multimédia et des réglages audio identiques dans la mémoire de l'appareil mobile et dans le réseau de communication sans fil (102) .

13. Procédé selon l'une quelconque des revendications 7 à 12, comprenant en outre un quatrième mode de fonctionnement applicable quand la connexion de données et d'alimentation est établie, dans lequel au moins un parmi un contenu multimédia, des instructions de commande, des listes de lecture de contenus multimédias, des informations de contenu multimédia et des réglages audio stockés dans la mémoire de l'appareil mobile (108) et dans l'unité de tête (109) est synchronisé pour avoir au moins un parmi un contenu multimédia, des instructions de commande, des listes de lecture de contenus multimédias, des informations de contenu multimédia et des réglages audio identiques dans la mémoire de l'appareil mobile et dans l'unité de tête.

14. Procédé selon l'une quelconque des revendications 7 à 13, comprenant en outre un cinquième mode de fonctionnement, applicable quand la connexion de données et d'alimentation et la connexion de données sans fil (207) sont établie, dans lequel au moins un parmi un contenu multimédia, des instructions de commande, des listes de lecture de contenus multimédias, des informations de contenu multimédia et des réglages audio stockés dans l'unité de tête (109) et dans le réseau de communication sans fil (102) est synchronisé pour avoir au moins un parmi un contenu multimédia, des instructions de commande, des listes de lecture de contenus multimédias, des informations de contenu multimédia et des réglages audio identiques dans l'unité de tête (109) et dans le réseau de communication sans fil (102).

15. Support de stockage lisible par ordinateur avec un code logiciel stocké que le processeur (203) peut exécuter pour réaliser le procédé selon les revendications 7 à 14.
